# EUROPÄISCHE PATENTANMELDUNG

(11) **EP 0 705 772 A2**
(43) Veröffentlichungstag der Anmeldung: **10.04.1996**
(21) Anmeldenummer: 95112124.3
(22) Anmeldetag: 02.08.1995
(51) Int. Cl.: B65D 90/44, B01J 19/14

(54) **Verfahren und Vorrichtung zum Inertisieren von Speicherräumen**

(30) Priorität: 12.09.1994 DE 4432346
(71) Anmelder: MESSER GRIESHEIM GmbH, D-60547 Frankfurt (DE)
(72) Erfinder: Lürken, Franz, Dr., D-47906 Kempen (DE); Vossloh, Karl-Johannes, D-45219 Essen (DE); Corinth, Hans-Gerd, D-53557 Bad Hönningen (DE)

(57) **Zusammenfassung**

Bei der Inertisierung von Silos (2) und Lägern werden Inertgase wie Stickstoff oder CO₂ als Reingase eingesetzt. Hierbei treten bei Temperaturschwankungen der Umgebung Verluste an Inertgas durch Konvektion auf. Zwecks Minimierung dieser Konvektionsverluste wird für die Inertisierung ein Inertgasgemisch (1, 3, 4) eingesetzt, dessen Dichte über die Änderung seiner Zusammensetzung an die Dichte des Umgebungsluft angepaßt wird.

## Beschreibung

Die Erfindung betrifft ein Verfahren und eine Vorrichtung zum Inertisiern von Produkten in Speicherräumen nach dem Oberbegriff des Anspruchs 1.

In Speicherräumen wie Silos oder Lägern werden Produkte unter Inertgasen gelagert, um sie vor Brand, Explosion oder Oxidation zu schützen. So wird beispielsweise Getreide unter Stickstoff oder CO₂ gelagert. Ein generelles Problem beim Inertisieren ist das Eindringen von Sauerstoff in den zu inertisierenden Speicherraum, das zur Verminderung der Produktqualität oder im schlimmsten Fall zu Unfällen durch Explosion führen kann. Um derartige Schäden zu verhindern wurden bereits verschiedene Maßnahmen getroffen. So wird in der DE-OS 3914783 eine Vorrichtung beschrieben, bei der das Eindringen von Fremdgasen, insbesondere von Sauerstoff, durch die bei der Befüllung zeitweise geöffnete Beschickungsöffnung von Reaktionsbehältern verhindert wird. In der noch nicht veröffentlichten deutschen Patentanmeldung P 4413074.0-41 wird ein Verfahren vorgestellt, bei dem in einem geöffneten Reaktor ein niedriger konstanter Restsauerstoffgehalt sichergestellt wird, indem die Zufuhr von Inertgas und die Menge des im Kopfraum des Reaktors abgezogenen Kopfraumgases in einem konstanten Verhältnis gehalten werden. Beide Maßnahmen sind sehr gut geeignet, um Explosionen bei zwischenzeitlich geöffneten Reaktoren, die explosionsgefährdete Produkte enthalten, zu verhindern. Es verbleibt jedoch das Problem, einen Inertisierungsschutz zu gewährleisten, wenn sich in dem Behälter bzw. Speicherraum Undichtigkeiten oder bei größeren Lagerstätten Löcher befinden oder wenn die Wandungen des Speicherraumes aus an sich porösem Material bestehen. Hierbei geht Inertgas durch Diffussion und Konvektion durch die undichten Stellen in dem Speicherraum verloren und Sauerstoff wird eingetragen. Dadurch wird ein wesentlich höherer Inertgasverbrauch verursacht als bei vollständig dichten Speichern.

Der Erfindung liegt daher die Aufgabe zugrunde ein Verfahren und eine Vorrichtung zu schaffen, mit denen Inertgasverluste und der Eintrag von Sauerstoff bei der Lagerung von Produkten insbesondere in undichten Speicherräumen auf ein Minimum reduziert werden können.

Ausgehend von dem im Oberbegriff des Anspruchs 1 berücksichtigten Stand der Technik ist die Aufgabe erfindungsgemäß gelöst mit den im kennzeichnenden Teil des Anspruchs 1 angegebenen Merkmalen.
Mit dem erfindungsgemäßen Verfahren und der Vorrichtung ist es nunmehr gelungen eine Möglichkeit zu schaffen, Speicherräume mit geringerem Inertgasverbrauch zu inertisieren als mit konventionellen Inertisierungsmethoden.

Vorteilhafte Weiterbildungen sind in den Unteransprüchen angegeben.

Die Zeichnungen veranschaulichen eine Vorrichtung zur Durchführung des erfindungsgemäßen Verfahrens in schematischer Form, sowie die Wirkungsweise des Verfahrens anhand einer Grafik.

Es zeigt:
- Fig.1:: Eine für die Durchführung des Verfahrens geeignete Vorrichtung.
- Fig.2:: Eine Abwandlung der Vorrichtung in Fig. 1.
- Fig.3:: Eine Grafik in der die Konzentration an Restsauerstoff eines Speicherraumes bei verschiedenen CO₂-Gehalten von einem aus N₂ und CO₂ bestehnden Inertgas in Abhängigkeit von der Temperaturdifferenz dargestellt ist.

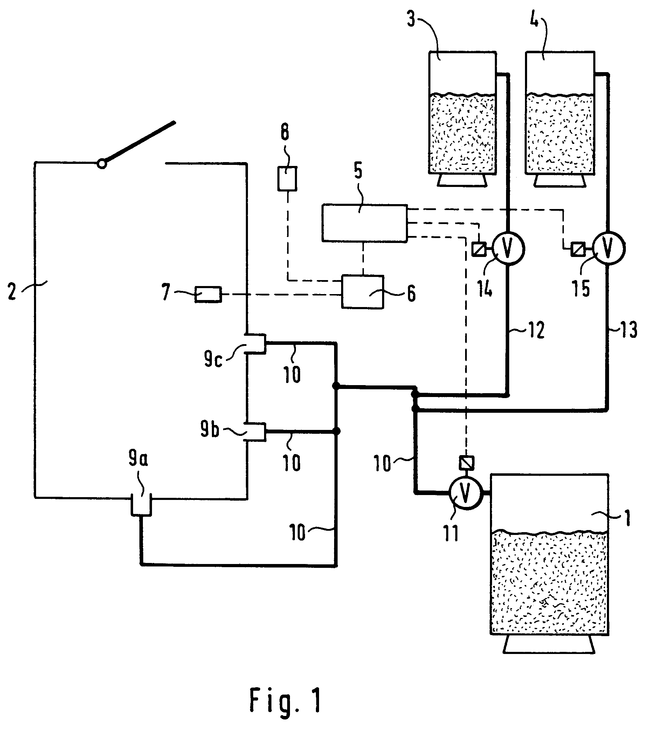

Die wesentlichen Bestandteile der in Figur 1 wiedergegebenen Vorrichtung sind der mit Inertgas gefüllte Speicher 1, der Speicherraum 2, die Speicher 3 und 4 für inerte Zusatzkomponenten, sowie ein Steuerungsgerät 5, ein Analysator 6 und Sensoren 7 und 8 im Inneren des Speicherraumes 2 und in der Umgebungsluft.
Der Speicherraum 2 ist über Eintrittsöffnungen 9a, 9b, 9c, durch eine Zufuhrleitung 10 und ein Steuerventil 11 mit dem Speicher 1 verbunden. In die Zufuhrleitung 10 münden weitere Zufuhrleitungen 12 und 13, die über die Steuerventile 14 und 15 Verbindungen zu den Speichern 3 und 4 herstellen. Die Steuerventile 11, 14 und 15 werden durch in der Zeichung gestrichelt gezeichneten Steuerleitungen, die nicht mit Bezugszeichen versehen sind, durch das Steuergerät 5 betätigt, das seinerseits über Steuerleitungen mit dem Analysator 6 in Verbindung steht, der seine Signale durch die Sensoren 7 und 8 erhält.

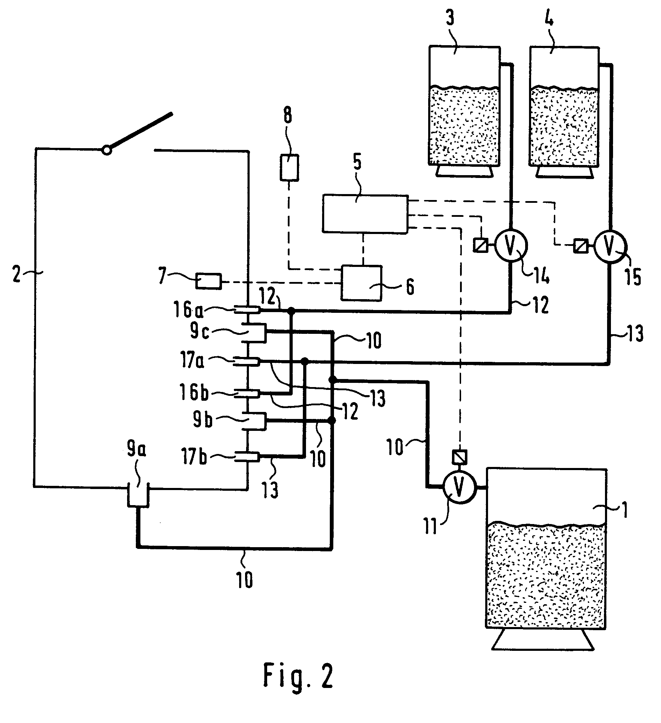

In Figur 2 sind gleichen Vorrichtungsmerkmalen dieselben Bezugszeichen zugeordnet, jedoch münden die Zufuhrleitungen 12 und 13 durch die Eintrittsöffnungen 16a, 16b und 17a,17b separat in den Speicherraum 2, ohne vorher in die Zufuhrleitung 10 einzumünden.

Wird nun beispielsweise ein Vorrat an Getreide gelagert, so wird der Speicherraum 2, in diesem Fall ein Silo, zunächst mit Getreide beschickt. Durch mögliche Haarrisse in den Wänden des Silos kann nun bei konventioneller Inertisierung mit ausschließlich einer Inertgaskomponente sowohl ein Austausch von Inertgas durch die Wandungen aber auch durch Undichtigkeiten an der Beschickungsöffnung des Speicherraumes durch Diffussion und Konvektion erfolgen. Hierbei tritt zum einen Sauerstoff in den zu inertisierenden Silos ein und zum anderen sind Inertgasverluste zu verzeichnen. Erfindungsgemäß wird nun die Konvektion, die die Hauptursache für diese Inertgasverluste darstellt, durch Anpassung der Dichte im Innenraum des Speicherraumes an die Dichte der Umgebungsluft unterbunden. Dies geschieht durch Änderung der Inertgaszusammensetzung in Abhängigkeit der Änderung der Dichte der Umgebungsluft, die zum Beispiel durch Temperaturänderungen bedingt sein kann. Zu diesem Zweck sind sowohl im Inneren des Silos als auch in der unmittelbaren Umgebung Sensoren 7 und 8 angebracht, die die Dichte messen. Hierfür kommen beispielsweise Dichtemeßvorrichtungen oder Temperaturmeßfühler in Betracht, die einige cm von der Außenwand des Silos angebracht sind, die ihre Signale an den Analysator 6 weitergeben, der mit einem Prozessor zur Auswertung der unterschiedlichen Dichte- oder Temperaturwerte ausgestattet ist, und mit einem Steuerungsgerät 5 verbunden ist, das die Steuerventile 11, 14 und 15 der Zufuhrleitungen 10, 12 und 13 ansteuert. Die Erfindung ist selbstverständlich nicht auf diese Art der Inertgaszufuhr beschränkt. So kann beispielsweise die Hauptinertisierungskomponente aus dem Speicher 1 und eine inerte Zusatzkomponente aus dem Speicher 4 alternierend in einem bestimmten Zeittakt zugeführt werden. Dies kann durch eine entsprechende Gasmischeinrichtung an der Schnittstelle der Zufuhrleitungen 10 und 13 bewerkstelligt werden. Im Falle der Grundinertisierung mit N₂ wird die Zufuhrleitung 10 aus dem Speicher 1, der in diesem Fall vorzugsweise durch eine on-site-Anlage ersetzt wird, versorgt. Der zur Inertisierung verwendete Stickstoff muß nicht als Reingas vorliegen, es darf auch - wie im Falle der on-site-Anlage - ein geringer Sauerstoffanteil von beispielsweise 2% enthalten sein. Als Zusatzkomponenten können zur Regulierung der Zusammensetzung des Inertgases aus dem Speicher 3 Helium und aus dem Speicher 4 CO₂ entnommen werden. Als Speicher 3 und 4 für CO₂ und Helium können wegen der geringen Entnahmemengen anstelle von Flüssigkeitstanks auch Gasflaschen verwendet werden. Sinkt nun die Dichte der Umgebungsluft aufgrund einer Temperaturerhöhung, so wird diese Änderung durch Temperaturmeßfühler, insbesondere Sensoren 7, im Innenraum des Silos und in der Umgebung gemessen und die Meßsignale werden im Analysator 6 ausgewertet. Der Analysator 6 ermittelt die zuzugebende Menge an Helium und gibt seine Signale an das Steuerungsgerät 5 weiter, welches das Steuerventil 14 des Speichers 3 öffnet. Im vorliegenden Fall kann nun Helium aus dem Speicher 3 über die Zufuhrleitung 12, die in die Zufuhrleitung 10 einmündet, entnommen werden und über deren Verteilersystem über die Eintrittsöffnungen 9a, 9b, 9c in den Silo eingetragen werden. Ist die Dichte der Umgebungsluft auf grund sinkender Temperaturen höher, so wird auf analogem Wege CO₂ aus dem Speicher 4 über das Steuerventil 15 in die Zufuhrleitung 13 eingespeist, die ebenfalls in die Zufuhrleitung 10 mündet. Im Falle der indirekten Dichtemessung über die Temperatur ist eine einmalige Kalibrierung der zuzugebenden Gasmengen und somit bei bekannten Rohrquerschnitten die Öffnungszeiten der Steuerventile 14 und 15 notwendig, um eine Regulierung der Dichte der Siloinnenraumes zu ermöglichen. Handelt es sich bei den Sensoren 7 und 8 um Dichtemeßeinheiten, so können die Steuerventile 14 und 15 in permanenter Rückkopplung mit den Dichtemeßeinheiten angesteuert werden. Nach der Abwandlung in Figur 2 werden die Zusatzkomponenten Helium und CO₂ direkt über die Zufuhrleitungen 12 und 13 in den Silo eingespeist. Dies hat den Vorteil, daß die Dichte des Inertgases im Innenraum des Silos schneller an die Umgebungsverhältnisse angepaßt werden kann. Selbstverständlich können zur Anpassung der Dichte des Innenraumes auch andere geeignete Gase, wie beispielsweise Argon oder SF₆ eingesetzt werden. Vorzugsweise sind die Eintrittsöffnungen 9a, 9b, 9c, bzw. 16a, 16b und 17a, 17b in verschiedenen Höhenabschnitten des Silos über den geamten Umfang verteilt angebracht. Es ist aber auch eine Anordnung möglich, bei der das Inertgas und seine Zusatzkomponenten durch eine Bodenöffnung des Silos in Form einer Kolbenströmung von unten eintritt. Manche Produkte stellen bei der Lagerung erhöhte Anforderungen an eine konstante Luftfeuchtigkeit. Dem kann Rechnung getragen werden, indem an das Inertisierungssystem eine Feuchteregulierung angeschlossen ist, die im Inneren des Speicherraumes 2 einen bestimmten Feuchtigkeitsgehalt aufrechterhält. Hierzu wird der Inertgasstrom mit Wasserdampf angereichert. Diese Feuchteregulierung kann, falls erforderlich, noch verfeinert werden, indem die Feuchtigkeit der Umgebungsluft gemessen und als Korrekturfaktor in die Dichteregulierung eingebracht wird. Es ist auch möglich, einen Standard-Korrekturfaktor für einen durchschnittlichen Wert der Außenfeuchtigkeit bei der temperaturgesteuerten Regelung einzuprogrammieren. Eine permanente Kontrolle der Außenfeuchtigkeit kann dann entfallen.

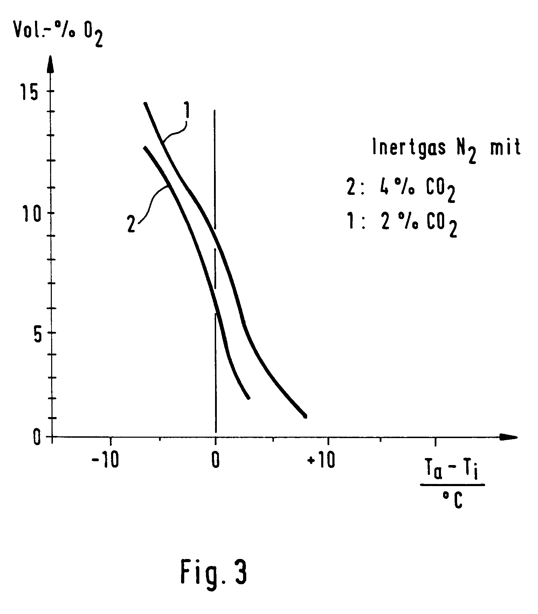

Die Wirkungsweise des erfindungsgemäßen Verfahrens wird an hand der Figur 3 verdeutlicht. In ihr ist die sich einstellende Restsauerstoffkonzentration in Volumen % in Abhängigkeit der Temperaturdifferenz zwischen der Außentemperatur Tₐ und der Innentemperatur Tᵢ für verschiedene Gaszusammensetzungen eines Inertgagemisches aus N₂ als Hauptkomponente und CO₂ dargestellt. Die Zusätze an CO₂ sind:
In Kurve 1: 2%
In Kurve 2: 4%
Die Temperaturdifferzenzwerte im negativen Ordinatenabschnitt zeigen den Bereich, in dem sich im Speicherraum ein Unterdruck, die Werte im positiven Ordinatenabschnitt den Bereich, in dem sich im Speicherraum ein Überdruck befindet. Bei geringerer Außentemperatur liegt im Speicherraum eine niedrigere Dichte gegenüber der Umgebungsluft vor. Die hiermit vorhendene Triebkraft für die Konvektion bewirkt einen Eintritt von Sauerstoff durch die Undichtigkeiten der Wandungen des Speicherraumes in den Innenraum. Für die Kurve 1 stellt sich bei einer Temperaturdifferenz von 5°C, der in der Grafik der Ordinatenwert -5 zugeordnet ist, eine Gleichgewichtskonzentration an Restsauerstoff von ca. 13 Vol% ein. Für kleinere Temperaturdifferenzen und damit verbundenen geringeren Dichteunterschieden zwischen dem Inneren des Speicherraumes und der Umgebungsluft sinkt der Restsauerstoffgehalt bei gleicher CO₂ - Konzentration. Für Temperaturgleichheit findet man für die Kurve 1 einen Restsauerstoffgehalt von ca. 8 Vol%. Bei der Erhöhung der CO₂-Konzentration erhält man bei Temperaturgleichheit einen entsprechend niedrigeren Wert an Restsauerstoff von ca. 5 Vol%.

Falls es am zu inertisierenden Objekt möglich ist, die Temperatur innen und außen untereinander gleich zu halten, (z.B. durch schlechte Isolation und gute Sonnenabschirmung) so kann auf eine permanente Variation der Gaszusammensetzung verzichtet werden. Hier genügt eine feste Gaszusammensetzung zur Einstellung der Dichte des Inertgases zur Angleichung an die Dichte der Umgebungsluft.

Unter Verzicht auf die volle Wirksamkeit der Verbraucherersparnis mittels der variablen Dichteeinstellung kann die Gaszusammensetzung auch auf einen Dichtemittelwert der Außenluft fest eingestellt werden. Diese ungefähre Angleichung der Dichte im Inneren an die Dichte der Umgebungsluft durch einmalige Änderung der Inertgaszusammensetzung ist die einfachste Form der beanspruchten Regelung.

Mit dem erfindungsgemäßen Verfahren und der Vorrichtung ist es gelungen, eine Möglichkeit zu schaffen, Produkte, die in Lägern, Silos aber auch anderen, kleinvolumigeren Speicherbehältern aufbewahrt werden, vor Brand, Explosion, Oxidation aber auch Insekten- oder Schädlingsbefall zu schützen, dabei Inertgasverluste auf ein Minimum zu begrenzen und mit geringem Aufwand Kosten zu sparen. Der Abdichtungsaufwand kann erheblich reduziert werden.

## Patentansprüche

1. Verfahren zum Inertisieren von Produken in Speicherräumen (2) wie beispielsweise Silos oder Lägern, durch Zufuhr von Inertgas in das Innere des Speicherraumes (2),
dadurch gekennzeichnet,
daß die Dichte des Inertgases durch Änderung der Gaszusammensetzung der Dichte der Umgebungsluft angeglichen wird.

2. Verfahren nach Anspruch 1,
dadurch gekennzeichnet,
daß die Außentemperatur erfaßt und als Regelgröße zum Angleichen der Dichte des Inertgases im Innern des Speicherraumes (2) herangezogen wird.

3. Verfahren nach einem der Ansprüche 1 oder 2,
dadurch gekennzeichnet,
daß im Speicherraum (2) ein Rest-Sauerstoffgehalt von weniger als 10 %, vorzugsweise weniger als 5% eingestellt wird.

4. Verfahren nach einem der Ansprüche 1 bis 3,
dadurch gekennzeichnet,
daß zur Regelung der Dichte des Inertgases im Inneren des Speicherraumes (2) eine oder mehrere Komponenten aus der Gruppe N₂, CO₂, Ar und He zugemischt werden, die von dem zum Inertisieren eingesetzten Inertgas verschieden sind.

5. Verfahren nach einem der Ansprüche 1 bis 4,
dadurch gekennzeichnet,
daß die Feuchtigkeit des Inertgases im Innern des Speicherraumes (2) als zusätzliche Regelgröße bei der Angleichung der Dichte des Inertgases an die Dichte der Umgebungsluft verwertet wird.

6. Vorrichtung zur Durchführung des Verfahrens nach Anspruch 1 mit einem Speicher (1) für Inertgas zum Inertisieren des Inneren des Speicherraumes (2) und einer mit einem Steuerventil (11) versehenen Zuführleitung (10) vom Speicher (1) in mindestens eine Eintrittsöffnung (9a,9b,9c) im Speicherraum (2), dadurch gekennzeichnet,
daß dem Speicher (1) mindestens ein Speicher (3,4) für dem Inertgas beizumischende inerte Zusatzkomponente zugeordnet ist, welcher über eine mit einem Steuerventil (14,15) versehene Leitung (12,13) an die Zufuhrleitung (10) angeschlossen ist, wobei ein Steuerungsgerät (5) vorhanden ist, das mit einem Analysator (6) verbunden ist, welcher Sensoren (7,8) zur Erfassung der Dichte im Innenraum des Speicherraumes (2) und in der Umgebung besitzt und welches über Steuerleitungen mit den Ventilen (11,14,15) in Verbindung steht.

7. Abwandlung der Vorrichtung gemäß Anspruch 6,
dadurch gekennzeichnet,
daß die Speicher (3,4) über mit den Steuerventilen (14,15) versehene Leitungen (12,13) direkt mit Eintrittsöffnungen (16a,16b,17a,17b) im Speicherraum (2) verbunden sind.

8. Vorrichtung nach Anspruch 6 oder 7,
dadurch gekennzeichnet
daß die Eintrittsöffnungen (9a,9b,9c,16a,16b,17a, 17b) in verschiedenen Höhen des Speicherraumes (2) angeordnet sind.

9. Vorrichtung nach einem der Ansprüche 6 bis 8,
dadurch gekennzeichnet,
daß das Steuergerät (5) einen zusätzlichen Sensor zur Erfassung der Feuchtigkeit des Inertgases im Innenren des Speicherraumes (2) als zusätzliche Regelgröße zur Angleichung der Dichte aufweist.

10. Vorrichtung nach einem der Ansprüche 6 bis 9,
dadurch gekennzeichnet,
daß eine on-site-Anlage als Entnahmequelle für N₂ als Inertgas dient.
